Europäisches Patentamt

European Patent Office

Office européen des brevets

(11) Publication number: **0 496 408 A1**

# EUROPEAN PATENT APPLICATION

(21) Application number: **92101104.5**

(22) Date of filing: **23.01.92**

(51) Int. Cl.⁵: **G01S 5/00, H04L 27/36**

(30) Priority: **25.01.91 KR 129591**

(43) Date of publication of application:
**29.07.92 Bulletin 92/31**

(84) Designated Contracting States:
**DE FR GB**

(71) Applicant: **SAMSUNG ELECTRONICS CO., LTD.**
**416 Maetan-Dong Kwonsun-Gu**
**Suwon-City Kyounggi-Do(KR)**

(72) Inventor: **Choi, Young-Ho**
**227-502 Jugong Apt., Kaepo-dong,**
**Kangnam-gu,**
**Seoul,(KO)**

(74) Representative: **Patentanwälte Grünecker,**
**Kinkeldey, Stockmair & Partner**
**Maximilianstrasse 58**
**W-8000 München 22(DE)**

(54) **Method for generating transmission message signal and circuit therefor in a vehicle tracking device.**

(57) A circuit for transmitting a given number of message data predetermined by an agreement with a central control station and receiving a signal indicative of a follow-up measure being taken, transmitted from the central control station when the follow-up measure has been taken at the central control station with respect to the situations of the vehicle tracking device.

FIG. 1

## BACKGROUND OF THE INVENTION

This invention relates to a method for transmitting a signal in a vehicle tracking device and a circuit therefor, and more particularly a method for generating a transmission message signal so as to let a user communicate with a central control station by transmitting a given number of predetermined messages together with simply informing a location and an emergency situation in a vehicle tracking device.

Generally, it is possible for a user to transmit only a pseudo noise code for calculating a vehicle's location and his own specific number in a vehicle tracking device.

A different device is required for transmitting any message in addition to the above mentioned message, and so there is nothing for it but to transmit his own specific number even in an emergency situation. Because a central control station does not understands the content of the situation only by the specific number, it is impossible for the central control station to grasp what kind of emergency situation is occurred.

## SUMMARY OF THE INVENTION

Therefore an object of this invention is to provide a circuit for transmitting a given number of message data predetermined by an agreement with a central control station and receiving a signal indicative of a follow-up measure being taken, transmitted from the central control station when the follow-up measure has been taken at the central control station with respect to the situations of the vehicle tracking device.

For example, a central control station makes a service station take a proper measure when receiving a message signal of "out of fuel" from a vehicle, and transmits a message signal "action taken" to a vehicle to be displayed on a display unit of a keypad.

According to an aspect of the present invention, a message data generator SA generates various message coding data agreed with a central control station, in response to a selection of message ends MES1 to MESN. A message noise eliminating circuit 10 eliminates a peak noise from a switching operation of the message data generator SA, and a microcomputer 20 generates a predetermined message data corresponding to the message coding data. First and second waveform shaping filters WS1, WS2 filter the message data from the microcomputer 20 and shape the filtered signal at a given frequency band to generate inphase and quadrature-phase waveform components, respectively. First and second oscillators OSC1, OSC2 generate first and second oscillating signals, and a phase shifter PH1 shifts the phase of the first oscillating signal. A first mixer MIX1 mixes the inphase waveform component from the first waveform shaping filter (WS1) with the first oscillating signal, and a second mixer MIX2 mixes the quadrature-phase waveform component from the second waveform shaping filter WS2 with the phase-shifted oscillating signal from the phase shifter PH1. An adder AD adds the signal from the first mixer MIX to the signal from the second mixer MIX2, and a third mixer MIX3 mixes the added signal from the adder AD with the second oscillating signal. An amplifier AMP1 amplifies the mixed signal from the third mixer MIX3, and a filter FIL1 filters a carrier frequency out of the amplified signal so as to transmit the filtered signal through an antenna ANT.

## BRIEF DESCRIPTION OF DRAWING

For a better understanding of the invention and to show how the same may be carried into effect, reference will now be made, by way of example, to the accompanying diagrammatic drawings, in which:

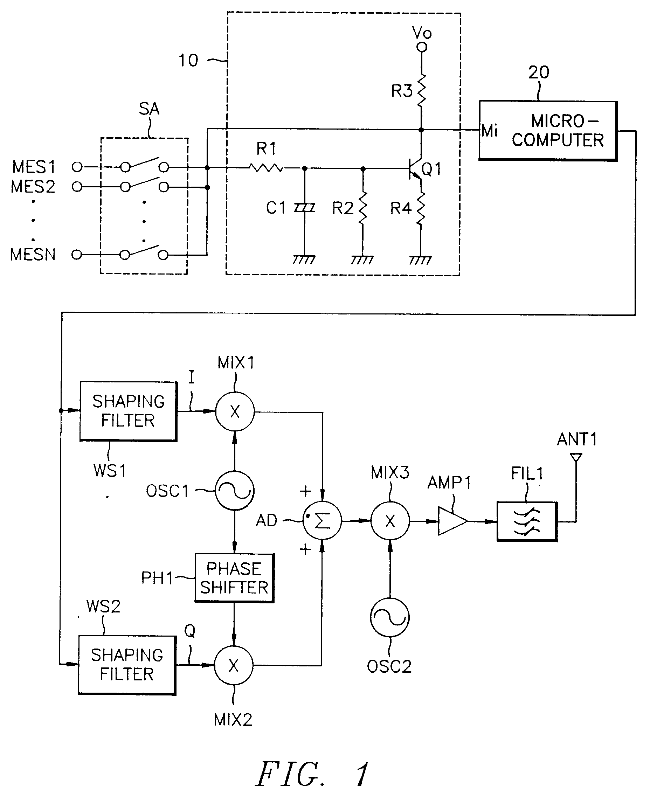

Fig.1 is a diagram of a circuit for generating a transmission message signal in a vehicle tracking device

## DETAILED DESCRIPTION OF A PREFERRED EMBODIMENT

With reference to Fig.1, a message data generator SA transmits message coding data predetermined in an agreement with a central control station according to a selection of message ends MES1 to MESH.

A message noise eliminating circuit 10 has a first resistor R1 connected between an output end of the message data generator SA and a base of a transistor Q1, and a capacitor C1 and a second resistor R2 connected in parallel between the first resistor R1 and the base of the transistor Q1, and eliminates a peak noise occurred by a switching operation of the message data generator SA. A microcomputer 20 generates predetermined message data by processing coding data of which noise is eliminated by the message noise eliminating circuit 10.

First and second waveform shaping filters WS1, WS2 filter the message data from the microcomputer 20 and shape the filtered signal into inphase and quadrature-phase waveform components I and Q at a given band. First and second oscillators OSC1, OSC2 generate oscillation signals, and a phase shifter PH1 shifts the phase of the oscillation signal from the oscillator OSC1. A first mixer MIX1 mixes the in-phase waveform from the first waveform shaping filter WS1 with the oscillation signal from the oscillator OSC1, and a second mixer MIX2 mixes the quadrature-phase waveform from the second waveform shaping filter WS2 with the signal from the phase shifter PH1. The signals from the first and second mixers MIX1, MIX2 are added by an adder AD.

A third mixer MIX3 mixes the signal form the adder AD with the signal form the oscillator OSC2. The signal from the third mixer MIX3 is amplified by a amplifier AMP. A filter FIL1 connected with an antenna ANT filters a carrier frequency out of the amplified signal from the amplifier AMP.

One embodiment of the present invention is described in detail hereinafter with reference to Fig. 1.

The message data generator SA disposed outside of the vehicle tracking device generates given coding data in response to the selection of the message signal input ends MES1 to MESN. The message data generator SA transmits the coding data to the microcomputer 20 through the message noise eliminating circuit 10 which eliminates noise component contained therein by an operation of the transistor Q1.

The microcomputer 20 processes the coding data from the message data generator SA to read a corresponding message data from a internal memory therein. The internal memory of the microcomputer 20 has a given number of message data to be generated according to various situations of a vehicle.

The first and second waveform shaping filters WS1, WS2 filter the message signal encoded by the microcomputer 20 and shapes the filtered signal into in-phase and quadrature-phase waveforms for making an envelope being uniform. The oscillator OSC1, OSC2 converts twice the frequency of the given signals from the waveform shaping filter WS1, WS2, and a class C amplifier is used as the amplifier AMP1. The amplified signal from the amplifier AMP1 is filtered by the filter FIL1 for transmitting only the carrier frequency at a given band to the antenna ANT.

The central control station takes a follow-up measure with respect to a situation of a vehicle according to the message signal and transmits a signal indicative of a follow-wp measure being taken, to the vehicle tracking device. The vehicle tracking device makes a user recognize it by displaying the indicating signal on a display unit.

As described in the above, there is an advantage to communicate with the central control station by transmitting a given number of predetermined messages except for informing simply a location of a car and an emergency situation in a vehicle tracking device.

While the invention has been particularly shown and described with reference to a preferred embodiment, it will be understood by those skilled in the art that modifications in detail may be made without departing from the spirit and scope of the invention.

## Claims

1. A method for transmitting a message to a central control station in a vehicle tracking device, comprising the steps of:

   generating message selection data according to the types of emergency situations of said vehicle tracking device;

   generating a message signal according to said message selection data;

   shaping said message signal into in-phase and quadrature-phase component signals to make a uniform envelope;

   converting the frequency of said in-phase and quadrature-phase signals, according to an oscillating frequency;

   amplifying the frequency-converted signal;

   filtering a carrier frequency out of the amplified signal to transmit the filtered signal to said central control station; and

   receiving a signal indicative of a follow-up measure being taken, transmitted from said central control station when the follow-up measure has been taken at the central control station with respect to the situations of said vehicle tracking device.

2. A circuit of transmitting a message in a vehicle tracking device, comprising:

   message data generator means (SA) for generating various message coding data agreed with a central control station, in response to a selection of message ends (MES1-MESN);

   message noise eliminating means (10) connected to said message data generator means (SA), for eliminating a peak noise from a switching operation of said message data generator means (SA);

   a microcomputer (20) connected to said message noise eliminating means (10), for generating a predetermined message data corresponding to the message coding data;

   first and second waveform shaping filter means (WS1, WS2) connected to said microcomputer (20), for filtering the message data from said microcomputer (20) and shaping the filtered signal at a given frequency band to generate in-phase and quadrature-phase waveform components, respectively;

   first and second oscillator means (OSC1, OSC2) for generating first and second oscillating signals;

phase shifter means (PHI) connected to said first oscillator means (OSC1), for shifting the phase of the first oscillating signal;

first mixer means (MIX1) connected to said first waveform shaping filter means (WS1), for mixing said in-phase waveform component from said first waveform shaping filter means (WS1) with said first oscillating signal;

second mixer means (MIX2) connected to said second waveform shaping filter means (WS2), for mixing said quadrature-phase waveform component from said second waveform shaping filter means (WS2) with the phase-shifted oscillating signal from said phase shifter means (PH1);

adder means (AD) connected between said first and second mixer means (MIX1, MIX2), for adding the signal from said first mixer means (MIX) to the signal from said second mixer means (MIX2);

third mixer means (MIX3) connected to said adder means (AD), for mixing the added signal from said adder means (AD) with said second oscillating signal;

amplifier means (AMP1) connected to said third mixer means (MIX3), for amplifying the mixed signal from said third mixer means (MIX3); and

filter means (FIL1) connected to said amplifier means (AMP1), for filtering a carrier frequency out of the amplified signal so as to transmit the filtered signal through an antenna (ANT).

FIG. 1

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 5) |
|---|---|---|---|
| Y | WO-A-8 801 750  (HUGHES AIRCRAFT)<br>* figure 2; page 13, lines 11-24 *<br>--- | 1,2 | G 01 S   5/00<br>H 04 L  27/36 |
| Y | US-A-4 404 532  (G.R. WELTI)<br>* figure 4; column 6, line 62 - column 7, line 62 *<br>--- | 1,2 | |
| A | GB-A-2 163 626  (STC)<br>* figure 1; abstract *<br>--- | | |
| A | EP-A-0 143 469  (FUJITSU)<br>* figure 1A; page 6, line 1 - page 7, line 17 *<br>--- | | |
| A | GB-A-1 548 209  (SECRETARY OF STATE, LONDON)<br>* figure 2; page 2, line 96 - page 3, line 16 *<br>--- | | |
| A | EP-A-0 382 695  (NOKIA MOBILE PHONES)<br>* figure 1; abstract *<br>----- | | |
| | | | TECHNICAL FIELDS SEARCHED (Int. Cl.5) |
| | | | G 01 S<br>H 04 L |

The present search report has been drawn up for all claims

| Place of search | Date of completion of the search | Examiner |
|---|---|---|
| BERLIN | 13-03-1992 | BREUSING J |

EPO FORM 1503 03.82 (P0401)